# DEMANDE DE BREVET EUROPEEN

(11) **EP 0 852 289 A1**
(43) Date de publication de la demande: **08.07.1998**
(21) Numéro de dépôt: 97403138.7
(22) Date de dépôt: 23.12.1997
(51) Int. Cl.: F02D 17/02, F01N 3/20

(54) **Procédé de gestion d'un moteur à combustion interne et moteur correspondant**

(30) Priorité: 06.01.1997 FR 9700054
(71) Demandeur: RENAULT, 92109 Boulogne-Billancourt (FR)
(72) Inventeur: Cornet, Pierrick, 91150 Morigny-Champigny (FR)

(57) **Abrégé**

Procédé de gestion d'un moteur et moteur 1 multicylindres à combustion interne comprenant un calculateur de contrôle de l'injection de carburant, au moins une sonde disposée en sortie des cylindres et un moyen de catalyse des gaz de combustion. Le calculateur est pourvu d'un moyen pour couper l'alimentation en carburant d'au moins un cylindre B, C, le moteur 1 fonctionnant à faible charge.

## Description

La présente invention concerne un procédé de gestion d'un moteur multicylindres à combustion interne et un moteur de ce type.

De façon conventionnelle, un moteur à essence est alimenté en carburant à la stoechiométrie, c'est-à-dire que l'on injecte une quantité de carburant correspondant précisément à la quantité d'oxygène introduite lors de l'admission d'air dans le cylindre. L'ensemble du carburant est oxydé et la quantité d'oxydes d'azote produite lors de la combustion reste faible. Le catalyseur que l'on dispose en sortie du moteur pour recevoir les gaz d'échappement fonctionne de façon satisfaisante à la stoechiométrie pour dépolluer les gaz d'échappement des oxydes d'azote, du monoxyde de carbone et d'hydrates de carbone imbrûlés.

Si l'on introduit une quantité de carburant supérieure à celle que peut oxyder l'air introduit dans le cylindre, on fonctionne à une richesse supérieure à 1 et l'efficacité du catalyseur chute fortement en ce qui concerne la dépollution du monoxyde de carbone et des hydrates de carbone imbrûlés. Dans l'autre sens, si l'on introduit dans le cylindre moins de carburant que ne peut en oxyder l'air introduit, on fonctionne à une richesse inférieure à 1. Le mélange devient très oxydant et provoque l'augmentation du taux d'oxydes d'azote. Le catalyseur ne parvient plus alors à réduire les oxydes d'azote.

Toutefois, on cherche à réduire de façon générale la consommation des moteurs à essence. Un moyen consiste en la dilution du mélange par de l'air, c'est-à-dire un fonctionnement à richesse inférieure à 1. L'admission d'air est contrôlée par un papillon qui est disposé dans une tubulure d'admission d'air en amont des soupapes d'admission dans le cylindre. Pour un même couple moteur, si l'on ouvre plus le papillon, on diminue les pertes par pompage de l'air qui se produisent lorsque la descente du piston dans le cylindre aspire l'air de la tubulure d'admission d'air. Par conséquent on augmente le rendement. Le moteur fonctionne en excès d'air également appelé mélange pauvre qui pose le problème de réduction des oxydes d'azote.

La présente invention a pour objet de remédier aux inconvénients des procédés évoqués ci-dessus en proposant un procédé de gestion d'un moteur à faible consommation de carburant tout en restant peu polluant.

La présente invention a également pour objet de proposer un procédé de gestion et un moteur qui combine la faible pollution des moteurs à mélange stoechiométrique et la faible consommation des moteurs à mélange pauvre.

Le procédé de gestion d'un moteur multicylindres à combustion interne, selon l'invention, comprend les étapes suivantes: lorsque le moteur est chargé, on alimente tous les cylindres à la stoechiométrie et lorsque le moteur est faiblement chargé, on n'alimente plus en carburant au moins un cylindre, tous les autres cylindres étant alimentés à la stoechiométrie, de façon à diminuer la richesse apparente d'alimentation du moteur. Ainsi, lorsque le moteur est faiblement chargé les cylindres non alimentés ne voient passer que de l'air ce qui ne provoque ni consommation de carburant ni pollution et les cylindres alimentés polluent peu grâce au mélange stoechiométrique. Par exemple, si l'on coupe deux cylindres d'un moteur à quatre cylindres on fonctionnera à une richesse apparente de 0,5.

Dans un mode de réalisation de l'invention, les gaz de combustion des cylindres alimentés à la stoechiométrie sont envoyés vers un premier catalyseur et les gaz issus du ou des cylindres non alimentés en carburant sont envoyés vers un deuxième catalyseur. Le deuxième catalyseur fonctionnera lorsque tous les cylindres seront alimentés à la stoechiométrie, le moteur étant chargé.

Avantageusement, le deuxième catalyseur est maintenu en température par un moyen de chauffage externe, par exemple par la chaleur dégagée par le premier catalyseur. On maintient ainsi le deuxième catalyseur prêt à fonctionner dès que tous les cylindres seront alimentés à la stoechiométrie.

Dans un mode de réalisation de l'invention, sur un moteur à quatre cylindres en ligne, les cylindres d'extrémité sont alimentés à la stoechiométrie et les cylindres centraux ne sont plus alimentés en carburant.

Le moteur multicylindres à combustion interne, selon l'invention, comprend un calculateur de contrôle de l'injection de carburant, au moins une sonde disposée en sortie des cylindres et un moyen de catalyse des gaz de combustion. Le calculateur est pourvu d'un moyen pour couper l'alimentation en carburant d'au moins un cylindre, le moteur fonctionnant à faible charge.

Dans un mode de réalisation de l'invention, le moteur comprend un premier catalyseur relié aux cylindres alimentés à la stoechiométrie et un deuxième catalyseur relié au cylindre susceptible de ne plus être alimenté en carburant, une sonde λ étant disposée à l'entrée de chaque catalyseur. La sonde λ est reliée au calculateur de contrôle pour ajuster l'injection de carburant.

Avantageusement, les deux catalyseurs sont adjacents et pourvus d'une enveloppe commune, de façon que le premier catalyseur réchauffe le deuxième catalyseur.

De préférence, les deux catalyseurs sont concentriques, le deuxième catalyseur étant disposé à l'intérieur du premier catalyseur. Ainsi le deuxième catalyseur reste en température même lorsqu'il est traversé par de l'air froid en provenance du ou des cylindres non alimentés en carburant. Le deuxième catalyseur reste prêt à fonctionner dès que le ou les cylindres correspondants seront de nouveau alimentés en carburant.

Dans un mode de réalisation de l'invention, le moteur comprend quatre cylindres dont deux sont susceptibles de ne plus être alimentés en carburant.

L'équilibrage mécanique du moteur reste identique quelle que soit son alimentation. En effet, les pistons des cylindres non alimentés en carburant ont le même mouvement que les autres pistons et le moteur n'a pas besoin d'être équilibré sur deux cylindres.

Grâce à l'invention, on obtient un gain de la consommation de carburant de l'ordre de 15% tout en maintenant une dépollution satisfaisante.

L'invention sera mieux comprise à l'étude de la description détaillée d'un mode de réalisation particulier pris à titre d'exemple nullement limitatif et illustré par les dessins annexés sur lesquels :
la figure 1 est une vue schématique montrant la disposition du moteur et des deux catalyseurs; et
la figure 2 est une vue schématique montrant un dispositif à deux catalyseurs concentriques.

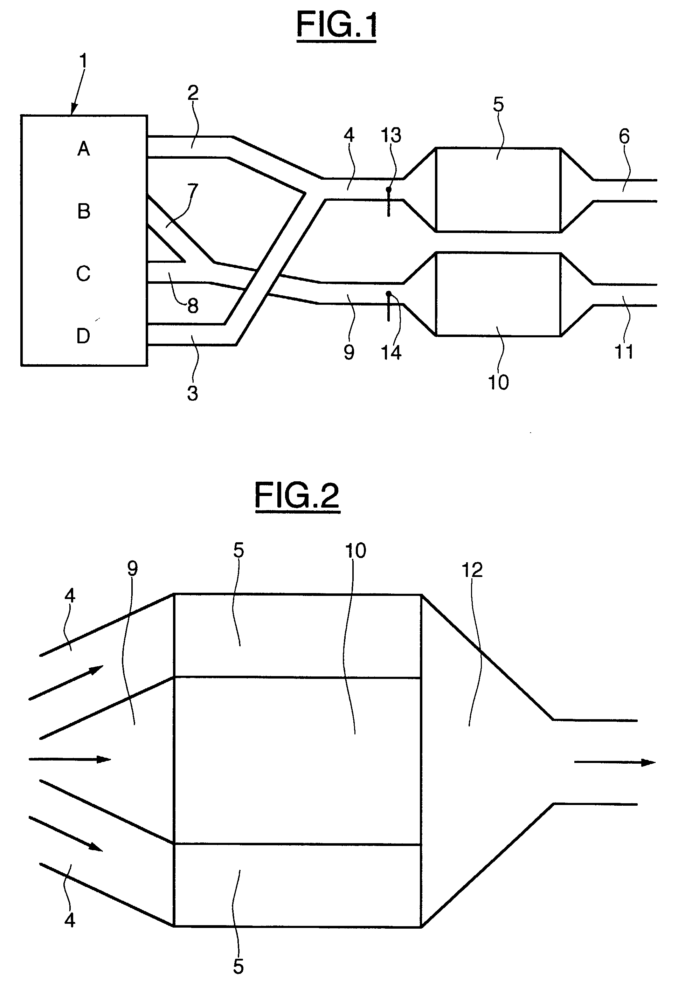

Comme on peut le voir sur la figure 1, le moteur 1 est du type à quatre cylindres en ligne repérés par les lettres A, B, C et D. Les cylindres A et D disposés aux extrémités du moteur 1 sont pourvus respectivement d'une tubulure de sortie des gaz d'échappement 2 et 3. Les tubulures 2 et 3 se raccordent en une tubulure commune 4 laquelle débouche sur un catalyseur 5. Le catalyseur 5 est pourvu d'une tubulure de sortie 6. De la même façon, les cylindres B et C disposés au centre du moteur 1 sont pourvus respectivement de tubulures de sortie des gaz d'échappement 7 et 8 qui se raccordent en une tubulure commune 9. La tubulure commune 9 débouche dans un catalyseur 10 pourvu d'une tubulure de sortie 11. Les tubulures de sortie 6 et 11 des catalyseurs 5 et 10 débouchent ensuite sur des moyens non représentés, tels qu'un pot d'échappement.

Lorsque le moteur 1 est fortement sollicité, les quatre cylindres A, B, C et D sont alimentés à la stoechiométrie c'est-à-dire à la richesse 1. La consommation de carburant est normale et la dépollution est effectuée de façon satisfaisante par les deux catalyseurs 5 et 10. Lorsque le moteur 1 est faiblement sollicité, les cylindres A et D sont toujours alimentés à la stoechiométrie. Leur gaz d'échappement passant par les tubulures 2 et 3 puis par la tubulure 4 traversent le catalyseur 5 qui fonctionne de la même façon que précédemment en effectuant une dépollution satisfaisante. Les deux cylindres B et C ne sont plus alimentés en carburant et ne brassent que de l'air. L'air brassé passe ensuite dans les tubulures 7 et 8 puis dans la tubulure 9 et dans le catalyseur 10. Cet air n'étant pas pollué, le catalyseur 10 ne fonctionne pas. En considérant le moteur 1 globalement, on constate qu'il est alimenté avec une richesse apparente de l'ordre de 0,5 et que sa dépollution est satisfaisante.

Toutefois, un problème peut se poser avec le catalyseur 10 qui alternativement verra passer de l'air brassé relativement froid lorsque le moteur est faiblement sollicité et des gaz d'échappement chauds lorsque le moteur est fortement sollicité. Le catalyseur 10 a besoin d'être à une température relativement élevée pour un fonctionnement satisfaisant. Lorsque l'on passe d'un régime de faible sollicitation à un régime de forte sollicitation du moteur 1, le catalyseur 10 ne sera pas en mesure immédiatement d'effectuer une dépollution satisfaisante. On prévoit donc un moyen de chauffage externe du catalyseur 10. Par exemple, on peut prévoir de chauffer le catalyseur 10 par une résistance électrique. Il est encore plus avantageux de regrouper les catalyseurs 5 et 10 dans une même enveloppe de façon que la chaleur dégagée par le catalyseur 5 qui fonctionne de façon permanente serve au maintien en température du catalyseur 10 qui fonctionne de façon intermittente.

Une telle réalisation est illustrée sur la figure 2. Le catalyseur 10 a la forme d'un cylindre autour duquel est disposé le catalyseur 5. Les catalyseurs 5 et 10 restent alimentés en gaz d'échappement de façon séparée par leurs tubulures respectives 4 et 9. La sortie des catalyseurs 5 et 10 est en communication avec une tubulure commune 12. Le sens d'écoulement des gaz est représenté par les flèches. Lorsque le moteur 1 est fortement sollicité, le fonctionnement des catalyseurs 5 et 10 s'effectue comme celui d'un catalyseur unique. Lorsque le moteur 1 est faiblement sollicité, le catalyseur 10 ne voit passer que de l'air relativement froid mais est maintenu en température par la chaleur dégagée dans le catalyseur 5. A l'accélération suivante lorsque les deux cylindres B et C du moteur 1 seront de nouveau alimentés et enverront leurs gaz d'échappement dans le catalyseur 10, celui-ci sera immédiatement en mesure de dépolluer ces gaz d'échappement.

Pour permettre à un calculateur, non représenté, de contrôle de l'injection du moteur 1 d'injecter une quantité adéquate de carburant dans chaque cylindre ou dans chaque paire de cylindres A et D, B et C, on prévoit de disposer deux sondes λ, 13 et 14 respectivement dans les deux tubulures 4 et 9. Le calculateur sera ainsi en mesure d'ajuster la richesse du mélange de façon optimale dans chaque paire de cylindres A et D, et B et C.

Lorsque le moteur 1 est froid, pendant quelques minutes après son démarrage, on peut prévoir que le calculateur commande l'alimentation des quatre cylindres A, B, C et D, même en cas de faible sollicitation, de façon à permettre une montée en température régulière du moteur 1 et un allumage régulier. Dans une variante on pourra n'autoriser le fonctionnement sur deux cylindres qu'à partir du moment où l'eau de refroidissement du moteur a atteint une température donnée. Dans une autre variante le calculateur n'autorisera le fonctionnement sur deux cylindres qu'après une durée de fonctionnement donnée.

Grâce à l'invention on parvient à concilier le gain en consommation et la dépollution avec un fonctionnement apparent en mélange pauvre pour des moteurs à essence à injection multipoints ou à injection directe.

## Revendications

1. Procédé de gestion d'un moteur multicylindres à combustion interne, caractérisé par le fait que :
- lorsque le moteur est chargé, tous les cylindres sont alimentés à la stoechiométrie,
- lorsque le moteur est faiblement chargé, au moins un cylindre n'est plus alimenté en carburant, tous les autres cylindres étant alimentés à la stoechiométrie, de façon à diminuer la richesse apparente d'alimentation du moteur.

2. Procédé selon la revendication 1, caractérisé par le fait que les gaz de combustion des cylindres alimentés à la stoechiométrie sont envoyés vers un premier catalyseur et que les gaz issus du ou des cylindres non alimentés en carburant sont envoyés vers un deuxième catalyseur.

3. Procédé selon la revendication 2, caractérisé par le fait que le deuxième catalyseur est maintenu en température par un moyen de chauffage externe.

4. Procédé selon la revendication 3, caractérisé par le fait que le deuxième catalyseur est maintenu en température par la chaleur dégagée par le premier catalyseur.

5. Procédé selon l'une quelconque des revendications précédentes, caractérisé par le fait que, sur un moteur à quatre cylindres en ligne, les cylindres d'extrémité sont alimentés à la stoechiométrie et les cylindres centraux ne sont plus alimentés en carburant.

6. Moteur multicylindres à combustion interne (1) comprenant un calculateur de contrôle de l'injection de carburant, au moins une sonde (13, 14) disposée en sortie des cylindres (A, B, C, D) et un moyen de catalyse (5, 10) des gaz de combustion, caractérisé par le fait que le calculateur est pourvu d'un moyen pour couper l'alimentation en carburant d'au moins un cylindre (B, C), le moteur fonctionnant à faible charge.

7. Moteur selon la revendication 6, caractérisé par le fait qu'il comprend un premier catalyseur (5) relié aux cylindres (A, D) alimentés à la stoechiométrie et un deuxième catalyseur (10) relié au cylindre (B, C) susceptible de ne plus être alimenté en carburant, une sonde λ (13, 14) étant disposée à l'entrée de chaque catalyseur (5, 10).

8. Moteur selon la revendication 7, caractérisé par le fait que les deux catalyseurs sont adjacents et pourvus d'une enveloppe commune, de façon que le premier catalyseur (5) réchauffe le deuxième catalyseur (10).

9. Moteur selon la revendication 8, caractérisé par le fait que les deux catalyseurs sont concentriques, le deuxième catalyseur (10) étant disposé à l'intérieur du premier catalyseur (5).

10. Moteur selon l'une quelconque des revendications 6 à 9, caractérisé par le fait qu'il comprend quatre cylindres (A, B, C, D) dont deux (B, C) sont susceptibles de ne plus être alimentés en carburant.
